# EUROPÄISCHE PATENTSCHRIFT

(11) **EP 2 049 807 B1**
(45) Veröffentlichungstag und Bekanntmachung des Hinweises auf die Patenterteilung: **29.10.2014**
(21) Anmeldenummer: 07818002.3
(22) Anmeldetag: 28.06.2007
(51) Int. Cl.: F16B 37/00, F16B 5/02

(54) **VORRICHTUNG ZUM BEFESTIGEN EINES ANBAUTEILES UND EINES TRÄGERTEILES IN EINEM ABSTAND VONEINANDER**
DEVICE FOR FASTENING AN ADD-ON PART AND A SUPPORT PART AT A DISTANCE FROM EACH OTHER
DISPOSITIF DE FIXATION D'UNE PIÈCE RAPPORTÉE ET D'UNE PIÈCE DE SUPPORT À DISTANCE L'UNE DE L'AUTRE

(30) Priorität: 26.07.2006 DE 102006034463
(43) Veröffentlichungstag der Anmeldung: 22.04.2009
(73) Patentinhaber: A. RAYMOND ET CIE, 38000 Grenoble (FR)
(72) Erfinder: DE GELIS, Vincent, 38100 Grenoble (FR)
(74) Vertreter: RACKETTE Partnerschaft Patentanwälte
(86) Internationale Anmeldenummer: PCT/EP2007/005704
(87) Internationale Veröffentlichungsnummer: WO 2008/011950

(56) Entgegenhaltungen:
- WO-A-2006/063634
- US-B1- 6 357 953

## Beschreibung

Die Erfindung betrifft eine Vorrichtung gemäß dem Oberbegriff des Patentanspruches 1.

Eine derartige Vorrichtung ist aus US 6,357,953 B1 bekannt. Bei dieser vorbekannten Vorrichtung zum Befestigen eines Anbauteiles und eines Trägerteiles in einem Abstand voneinander ist eine mit dem Trägerteil fest verbindbare Einbaumutter vorhanden, die ein Innengewinde einer ersten Gangrichtung aufweist. Weiterhin ist eine Ausgleichbuchse vorgesehen, die ein an das Innengewinde der Einbaumutter angepasstes Außengewinde aufweist, wobei die Ausgleichsbuchse in die Einbaumutter einschraubbar ist.

Mit einer einen Schraubenschaft aufweisenden Befestigungsschraube ist das Anbauteil mit der Ausgleichsbuchse verbindbar, wobei der Schraubenschaft mit einem Außengewinde einer zu der ersten Gangrichtung entgegengesetzten zweiten Gangrichtung ausgebildet und in einen durch die Einbaumutter sowie in die Ausgleichsbuchse eingebrachten Schraubenkanal einführbar ist. Die Ausgleichsbuchse weist einen Kanalabschnitt auf, der einen Teil des Schraubenkanales bildet und dessen Innendurchmesser kleiner als der Außendurchmesser des Schraubenschaftes ist.

Der Schraubenschaft ist aus einem gegenüber dem Material der Ausgleichsbuchse härteren Material, so dass der Schraubenschaft beim Eindrehen in den Kanalabschnitt der Ausgleichsbuchse in dem Kanalabschnitt zunächst solange ein Gewinde einschneidet, bis dass hierfür erforderliche Drehmoment größer als das Drehmoment wird, das zum gegensinnigen Herausdrehen der Ausgleichsbuchse aus der Einbaumutter erforderlich ist. Sobald die Ausgleichsbuchse an dem Anbauteil anliegt, setzt sich das Einschneiden des Gewindes durch den Schraubenschaft in den Kanalabschnitt der Ausgleichsbuchse fort, bis das Anbauteil fest mit dem Trägerteil verbunden ist.

Der Erfindung liegt die Aufgabe zugrunde, eine Vorrichtung der eingangs genannten Art anzugeben, die sich auch bei verhältnismäßig großen Toleranzen zwischen den Durchmessern des Kanalabschnittes der Ausgleichsbuchse und des Schraubenschaftes der Befestigungsschraube durch verhältnismäßig geringe Anzugsmomente sowie durch eine verhältnismäßig große Variabilität in der Materialwahl bei der Befestigungsschraube und der Ausgleichsbuchse auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung der Ausgleichsbuchse einen Kopfabschnitt mit einer alternierenden Abfolge von Zonen mit einem verhältnismäßig hohen Widerstand gegen radiales Aufweiten und von Zonen mit einem demgegenüber verhältnismäßig geringen Widerstand gegen radiales Aufweiten aufweist, verfügt der in Eingriff mit dem Schraubenschaft kommende Kopfabschnitt über eine gewisse Flexibilität, die Toleranzen ausgleicht und auch in ihrer mechanischen Eigenschaften verhältnismäßig ähnliche Materialien für die Befestigungsschraube sowie Ausgleichsbuchse zulässt.

Weitere zweckmäßige Ausgestaltungen der Erfindung sind Gegenstand der Unteransprüche.

Aus der nachfolgenden Beschreibung eines Ausführungsbeispiels der Erfindung unter Bezug auf die Figuren der Zeichnung ergeben sich weitere zweckmäßige Ausgestaltungen und Vorteile. Es zeigen:
- Fig. 1: im Schnitt eine Einbaumutter und eine Ausgleichsbuchse eines Ausführungsbeispieles einer erfindungsgemäßen Vorrichtung,
- Fig. 2: in einer teilgeschnittenen perspektivischen Ansicht die Ausgleichsbuchse des Ausführungsbeispieles gemäß Fig. 1,
- Fig. 3: im Schnitt das Ausführungsbeispiel gemäß Fig. 1 und Fig. 2 mit einer teilweise aus der Einbaumutter herausgeschraubten Ausgleichsbuchse und
- Fig. 4: in einem Längsschnitt das Ausführungsbeispiel gemäß Fig. 1 bis Fig. 3 in einer Endmontagestellung, in der eine Befestigungsschraube sowohl in die Ausgleichsbuchse als auch in die Einbaumutter eingeschraubt ist.

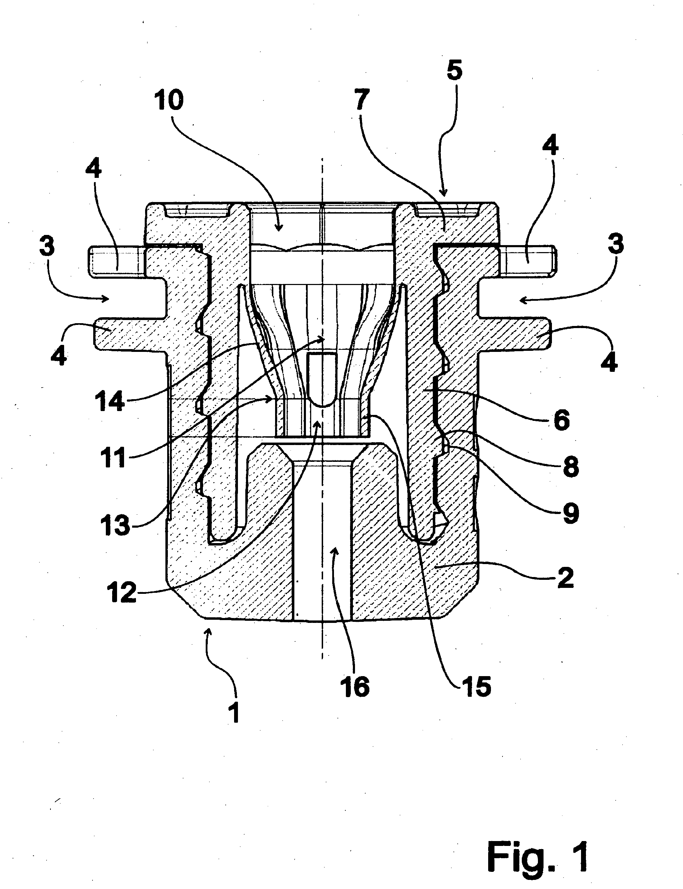

Fig. 1 zeigt in einer perspektivischen Darstellung ein Ausführungsbeispiel einer erfindungsgemäßen Vorrichtung, das eine Einbaumutter 1 aus einem Kunststoff mit einem im wesentlichen zylinderförmigen Mutterkörper 2 aufweist. An der Außenseite des Mutterkörpers 2 sind eine Anzahl von beidseitig von Freiräumen 3 paarweise einander gegenüberliegender Anlagevorsprünge 4 ausgebildet, die radial nach außen vorstehen.

Weiterhin ist in Fig. 1 eine Ausgleichsbuchse 5 aus einem Kunststoff dargestellt, die mit einem ebenfalls im wesentlichen zylinderförmigen Buchsenkörper 6 und mit einem an einem Ende des Buchsenkörpers 6 angeformten sowie radial über den Buchsenkörper 6 überstehenden Anlageteller 7 ausgebildet ist. An der Außenseite des Buchsenkörpers 6 ist ein Außengewinde 8 mit einer ersten Gangrichtung ausgebildet, das in der Anordnung gemäß Fig. 1 in ein einen der Einbaumutter 1 ausgebildetes Innengewinde 9 eingeschraubt ist, das auf der Innenseite des Mutterkörpers 2 mit der ersten Gangrichtung und komplementär zu dem Außengewinde 8 des Buchsenkörpers 6 ausgebildet ist.

Die erfindungsgemäße Vorrichtung ist mit einem Schraubenkanal 10 ausgebildet, der sich axial durch den Buchsenkörper 6 der Ausgleichsbuchse 5 erstreckt und der einen sich von dem Anlageteller 7 wegweisend trichterförmig verjüngenden Einführabschnitt 11 sowie einen sich an den Einführabschnitt 11 anschließenden ersten Kanalabschnitt 12 aufweist, die von einer Innenhülse 13 umgeben sind.

Die Innenhülse 13 ist an den Buchsenkörper 6 auf der Seite des Anlagetellers 7 angeformt und erstreckt sich von dem Anlageteller 7 weg. Die Innenhülse 13 verfügt über einen sich entsprechend der Gestalt des Einführabschnittes 11 konisch verjüngenden Fußabschnitt 14, der in dem an den Anlageteller 7 angrenzenden Bereich des Buchsenkörpers 6 an den Buchsenkörper 6 angeformt ist. An dem dem Anlageteller 7 gegenüberliegenden Ende ist die Innenhülse 13 mit einem Kopfabschnitt 15 ausgebildet, der in Verlängerung des ersten Kanalabschnittes 12 einem in dem Mutterkörper 2 ausgebildeten zweiten Kanalabschnitt 16 des Schraubenkanales 10 gegenüberliegt. Bei diesem Ausführungsbeispiel ist der zweite Kanalabschnitt 16 zur einfachen Herstellung zylinderförmig und glattwandig ausgebildet.

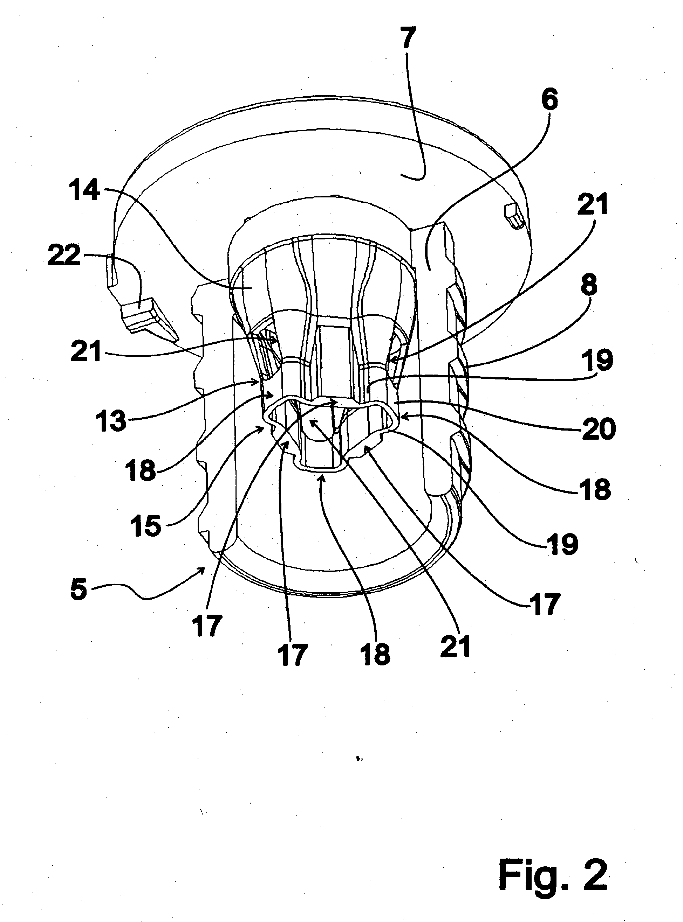

Fig. 2 zeigt in einer teilgeschnittenen perspektivischen Ansicht die Ausgleichsbuchse 5 des Ausführungsbeispieles gemäß Fig. 1. Aus Fig. 2 ist ersichtlich, dass der Kopfabschnitt 15 mit eine alternierenden Anordnung von materialverdickten Verstärkungszonen 17 und von zwischen den Verstärkungszonen 17 liegenden, U-artig ausgebildeten Adaptionszonen 18 ausgestattet ist. Die Adaptionszonen 18 sind jeweils mit zwei Randschenkeln 19 und mit einem Basisabschnitt 20 ausgestaltet, wobei die Randschenkel 19 jeweils an benachbarten Verstärkungszonen 17 angesetzt und die Basisabschnitte 20 radial weiter außen als die Verstärkungszonen 17 angeordnet sind. Somit weisen die Verstärkungszonen 17 einen gegenüber einem radial nach außen gerichteten Aufweiten größeren Widerstand als die Adaptionszonen 18 auf, während sie jedoch durch ein verhältnismäßig einfach durchführbares Verformen der Adaptionszonen 18 relativ beweglich bleiben.

Der Fußabschnitt 14 weist eine Anzahl von in Längsrichtung den Adaptionszonen 18 gegenüberliegenden Schwächungsausnehmungen 21 auf, um die Flexibilität des Kopfabschnittes 15 im Bereich der Adaptionszonen 18 zu erhöhen.

Schließlich ist Fig. 2 zu entnehmen, dass bei dem erläuterten Ausführungsbeispiel an dem Anlageteller 7 auf der dem Buchsenkörper 6 zugewandten Seite ein erster Drehanschlag 22 ausgebildet ist, der mit einem in den Figuren nicht dargestellten, an der Einbaumutter 1 ausgebildeten zweiten Drehanschlag zusammenwirkt, um das Eindrehen des Buchsenkörpers 6 in den Mutterkörper 2 definiert zu begrenzen.

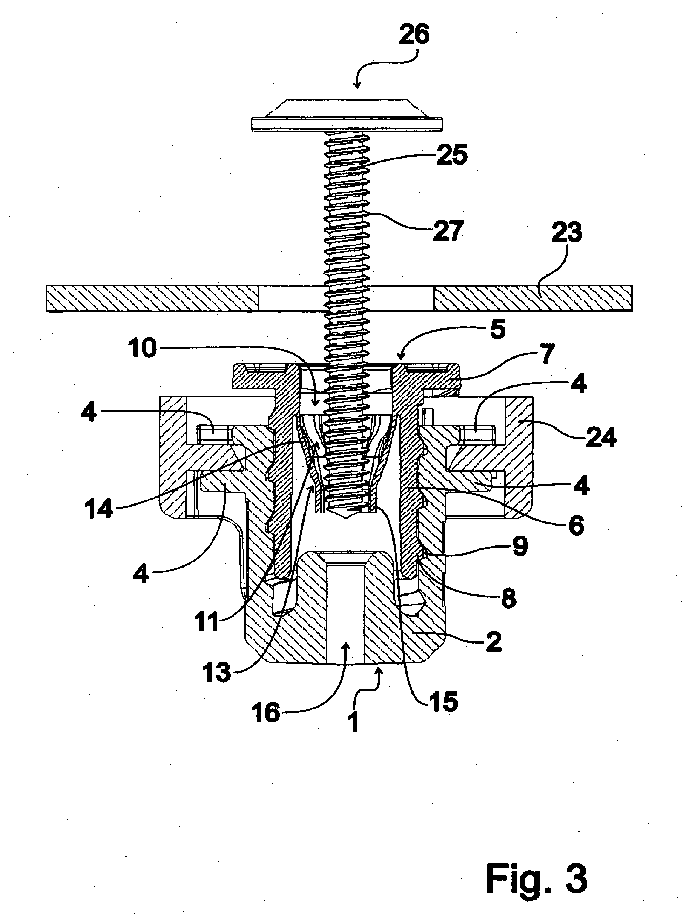

Fig. 3 zeigt im Schnitt das Ausführungsbeispiel gemäß Fig. 1 und Fig. 2 im Einsatz dem Befestigen eines Anbauteiles 23 in einem Abstand von einem Trägerteil 24, an dem die Einbaumutter 1 durch Kraftschluss und/oder durch Formschluss angebracht ist, beim Einschrauben eines Schraubenschaftes 25 einer Befestigungsschraube 26 mit einer teilweise aus der Einbaumutter 1 herausgeschraubten Ausgleichsbuchse 5. Der Schraubenschaft 25 ist mit einem Außengewinde 27 mit einer zu der ersten Gangrichtung der zwischen der Einbaumutter 1 und der Ausgleichsbuchse 5 ausgebildeten Gewindeanordnung entgegengesetzten zweiten Gangrichtung ausgebildet. Die Befestigungsschraube 26 ist aus einem gegenüber den Materialien der Einbaumutter 1 und der Ausgleichsbuchse 5 härteren Material wie beispielsweise einem Metall oder einem gegenüber den bei der Herstellung der Einbaumutter 1 sowie der Ausgleichsbuchse 5 verwendeten Kunststoffen härteren Kunststoff hergestellt.

Der Außendurchmesser des Schraubenschaftes 25 der Befestigungsschraube 26 ist größer als der kleinste Innendurchmesser sowohl des Kopfabschnittes 15 der Innenhülse 13 als auch des zweiten Kanalabschnittes 16 des Mutterkörpers 2, so dass bei Eingriff des Außengewindes 27 der Befestigungsschraube 26 mit dem Kopfabschnitt 15 der Innenhülse 13 sich nach Übersteigen eines bestimmten Drehmomentes die Ausgleichsbuchse 5 entgegen der Drehrichtung der Befestigungsschraube 26 aus der Einbaumutter 1 herausdreht und sich in axialer Richtung auf das Anbauteil 23 zu bewegt. In Abhängigkeit der Härte der verwendeten Materialien der Ausgleichsbuchse 5 sowie der Befestigungsschraube 26 ergibt sich ein mehr oder weniger ausgeprägtes Einschneiden eines Gewindes in den Kopfabschnitt 15 kombiniert mit einem mehr oder weniger kräftigen radialen Andruck der Verstärkungszonen 17 an den Schraubenschaft 25.

Sobald der Anlageteller 7 der Ausgleichsbuchse 5 an der dem Trägerteil 24 zugewandten Seite des Anbauteiles 23 anliegt und die Befestigungsschraube 26 weiter gedreht wird, tritt der Schraubenschaft 25 vollständig durch den Kopfabschnitt 15 durch und bewegt sich weiter in Richtung des in dem Mutterkörper 2 der Einbaumutter 1 ausgebildeten zweiten Kanalabschnittes 16.

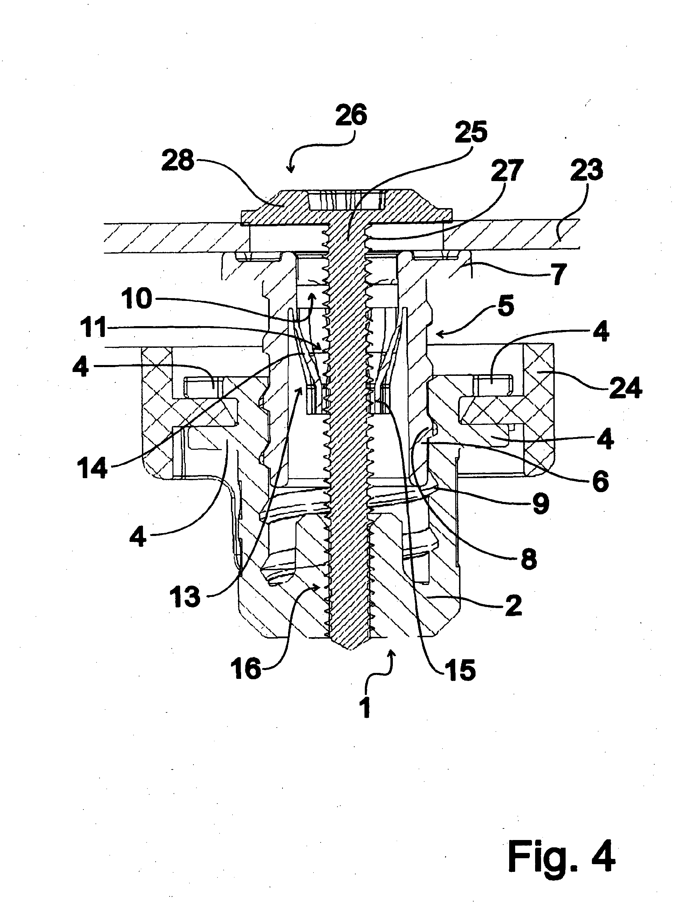

Fig. 4 zeigt in einem Längsschnitt das Ausführungsbeispiel gemäß Fig. 1 bis Fig. 3 in einer Endmontagestellung, in der die Befestigungsschraube 26 sowohl in die Ausgleichsbuchse 5 als auch in die Einbaumutter 1 eingeschraubt ist und ein Schraubenkopf 28 der Befestigungsschraube 26 an der dem Trägerteil 24 gegenüberliegenden Seite des Anbauteiles 23 anliegt. In dieser Anordnung ist die Ausgleichsbuchse 5 maximal aus der Einbaumutter 1 herausgedreht und liegt mit ihrem Anlageteller 7 an der dem Trägerteil 24 zugewandten Seite des Anbauteiles 23 an, so dass das Anbauteil 23 in einem Abstand zu Trägerteil 24 angeordnet ist.

In der Endmontagestellung greift der Schraubenschaft 25 in den zweiten Kanalabschnitt 16 des Mutterkörpers 2 der Einbaumutter 1 unter Ausbilden eines Außengewindes ein, wobei in Abhängigkeit des Materiales der Befestigungsschraube 26 das Außengewinde 27 der Befestigungsschraube 26 mehr oder weniger stark beziehungsweise nicht verformt wird. Dadurch ist der Abstand zwischen dem Anbauteil 23 und dem Trägerteil 24 unveränderlich gesichert, da beim Bewegen des Anbauteiles 23 von dem Trägerteil 24 weg die Last durch das zwischen dem Schraubenschaft 25 und dem zweiten Kanalabschnitt 16 ausgebildete Gewinde aufgenommen wird, während beim Bewegen des Anbauteiles 23 in Richtung des Trägerteiles 24 ein unbeabsichtigtes Zurückdrehen der Ausgleichsbuchse 5 in Richtung der Einbaumutter 1 durch die verhältnismäßig große Reibung zwischen dem Schraubenschaft 25 und dem Kopfabschnitt 15 verhindert ist.

## Patentansprüche

1. Vorrichtung zum Befestigen eines Anbauteiles (23) und eines Trägerteiles (24) in einem Abstand voneinander mit einer mit dem Trägerteil (24) fest verbindbaren Einbaumutter (1), die ein Innengewinde (9) einer ersten Gangrichtung aufweist, mit einer Ausgleichbuchse (5), die ein an das Innengewinde (9) der Einbaumutter (1) angepasstes Außengewinde (8) aufweist, wobei die Ausgleichsbuchse (5) in die Einbaumutter (1) einschraubbar ist, und mit einer einen Schraubenschaft (25) aufweisenden Befestigungsschraube (26) zum Verbinden des Anbauteiles (23) mit der Ausgleichsbuchse (5), wobei der Schraubenschaft (25) mit einem Außengewinde (27) einer zu der ersten Gangrichtung entgegengesetzten zweiten Gangrichtung ausgebildet und in einen in die Einbaumutter (1) sowie in die Ausgleichsbuchse (5) eingebrachten Schraubenkanal (10) einführbar ist und wobei die Ausgleichsbuchse (5) einen Kanalabschnitt (12) aufweist, der einen Teil des Schraubenkanales (10) bildet und dessen Innendurchmesser kleiner als der Außendurchmesser des Schraubenschaftes (25) ist, **dadurch gekennzeichnet, dass** die Ausgleichsbuchse (5) mit einer innenliegenden Innenhülse (13) ausgebildet ist, die einen Kopfabschnitt (15) mit einer alternierenden Anordnung von Verstärkungszonen (17) und von Adaptionszonen (18) aufweist, wobei die Verstärkungszonen (17) einen gegenüber einem radial nach außen gerichteten Aufweiten größeren Widerstand als die Adaptionszonen (18) aufweisen.

2. Vorrichtung nach Anspruch 1, **dadurch gekennzeichnet, dass** die Innenhülse (13) an den Buchsenkörper (6) auf der Seite eines Anlagetellers (7) angeformt ist, der an dem von der Einbaumutter (1) wegweisenden Ende der Ausgleichsbuchse (5) ausgebildet ist und wenigstens abschnittsweise radial über das Außengewinde (8) der Ausgleichsbuchse (5) vorsteht.

3. Vorrichtung nach Anspruch 2, **dadurch gekennzeichnet, dass** sich zwischen dem Kopfabschnitt (15) und dem Anlageteller (7) ein sich von dem Anlageteller (7) zu dem Kopfabschnitt (15) konisch verjüngender Fußabschnitt (14) erstreckt, der eine Anzahl von in Längsrichtung den Adaptionszonen (18) gegenüberliegenden Schwächungsausnehmungen (21) aufweist.

4. Vorrichtung nach Anspruch 3, **dadurch gekennzeichnet, dass** die Adaptionszonen (18) jeweils U-artig mit zwei Randschenkeln (19) und mit einem Basisabschnitt (20) ausgestaltet sind, wobei die Randschenkel (19) jeweils an benachbarten Verstärkungszonen (17) angesetzt und die Basisabschnitte (20) radial weiter außen als die Verstärkungszonen (17) angeordnet sind.

5. Vorrichtung nach einem der Ansprüche 1 bis 4, **dadurch gekennzeichnet**, das die Verstärkungszonen (17) eine größere Materialstärke als die Adaptionszonen (18) aufweisen.

6. Vorrichtung nach einem der Ansprüche 1 bis 5, **dadurch gekennzeichnet, dass** die Einbaumutter (1) aus einem gegenüber dem Schraubenschaft (26) weichen Kunststoff hergestellt ist und einen Kanalabschnitt (16) aufweist, der einen Teil des Schraubenkanales (10) bildet und dessen Innendurchmesser kleiner als der Außendurchmesser des Schraubenschaftes (25) ist, so dass mit dem Außengewinde (27) des Schraubenschaftes (25) der Befestigungsschraube (26) in den Kanalabschnitt (16) der Einbaumutter (1) ein Innengewinde einformbar sind.

## Claims

1. Device for fastening an added part (23) and a carrying part (24) at a distance from one another, having an insert nut (1), able to be solidly connected to the carrying part (24), which has an inside thread (9) of a first handedness, having a compensating bush (5) which has an outside thread (8) matched to the inside thread (9) of the insert nut (1), the compensating bush (5) being able to be screwed into the insert nut (1), and having a fastening screw (26), having a shank (25), for connecting the added part (23) to the compensating bush (5), the screw shank (25) being formed to have an outside thread (27) of a second handedness opposite from the first handedness and being able to be introduced into a screw passage (10) made in the insert nut (1) and in the compensating bush (5) and the compensating bush (5) having a passage portion (12) which forms part of the screw passage (10) and whose inside diameter is smaller than the outside diameter of the screw shank (25), **characterised in that** the compensating bush (5) is formed to have an internal inner sleeve (13) which has a tip portion (15) having an alternating layout of strengthened zones (17) and adapting zones (18), the strengthened zones (17) having a greater resistance to radially outwardly directed expansion than the adapting zones (18).

2. Device according to claim 1, **characterised in that** the inner sleeve (13) is integrally formed on the body (6) of the bush at the same end as a support flange (7), which support flange (7) is formed at that end of the compensating bush (5) which faces away from the insert nut (1) and at least a portion or portions thereof project radially beyond the outside thread (8) of the compensating bush (5).

3. Device according to claim 2, **characterised in that** there extends between the tip portion (15) and the support flange (7) a root portion (14) which tapers conically from the support flange (7) to the tip portion (15) and which has a plurality of weakening openings (21) situated next to the adapting zones (18) in the longitudinal direction.

4. Device according to claim 3, **characterised in that** the adapting zones (18) are each of a U-like shape formed by two side-limbs (19) and a bottom portion (20), the side-limbs (19) each being joined to adjacent strengthened zones (17) and the bottom portions (20) being arranged further outwards radially than the strengthened zones (17).

5. Device according to one of claims 1 to 4, **characterised in that** the thickness of the material of the strengthened zones (17) is greater than that of the adapting zones (18).

6. Device according to one of claims 1 to 5, **characterised in that** the insert nut (1) is made of a plastics material which is soft in comparison with the screw shank (26), and has a passage portion (16) which forms part of the screw passage (10) and whose inside diameter is smaller than the outside diameter of the screw shank (25), an inside thread thus being able to be formed in the passage portion (16) of the insert nut (1) by the outside thread (27) on the shank (25) of the fastening screw (26).

## Revendications

1. Dispositif de fixation d'un élément rapporté (23) et d'un élément porteur (24) avec un certain intervalle d'écartement l'un par rapport à l'autre, comprenant un écrou encastré (1) susceptible d'être rendu solidaire de l'élément porteur (24), qui comporte un taraudage (9) réalisé avec un pas d'un premier sens, comprenant une douille de compensation (5) qui comporte un filetage extérieur (8) conjugué au taraudage (9) de l'écrou encastré (1), la douille de compensation (5) étant en l'occurrence destinée à être vissée dans l'écrou encastré (1), et comprenant une vis de fixation (26) munie d'une portion filetée (25), destinée à assembler l'élément rapporté (23) avec la douille de compensation (5), la portion filetée (25) comportant en l'occurrence un filetage extérieur (27) réalisé avec un pas d'un deuxième sens opposé au pas d'un premier sens et étant destinée à être insérée dans un gabarit de passage fileté (10) ménagé dans l'écrou encastré (1) ainsi que dans la douille de compensation (5), la douille de compensation (5) comportant en l'occurrence une portion formant gabarit de passage (12), qui constitue une partie intégrante du gabarit de passage de vis (10) et dont le diamètre intérieur est plus petit que le diamètre extérieur de la portion filetée (25), **caractérisé en ce que** la douille de compensation (25) est munie d'un manchon intérieur intégré (13) qui comporte une portion de tête (15) présentant une succession alternée de zones de renforcement (17) et de zones d'adaptation (18), les zones de de renforcement (17) opposant en l'occurrence une résistance plus importante que les zones d'adaptation (18) à une poussée de forçage à l'écartement orientée vers l'extérieur dans le plan radial.

2. Dispositif selon la revendication 1, **caractérisé en ce que** le manchon intérieur (13) est réalisé par moulage solidaire du corps de la douille (6) sur le côté d'une collerette d'appui (7), qui est prévue au niveau de l'extrémité de la douille de compensation (5) orientée vers l'extérieur depuis l'écrou encastré (1) et qui fait saillie au moins en partie dans le plan radial au-dessus du filetage extérieur (8) de la douille de compensation (5).

3. Dispositif selon la revendication 2, **caractérisé en ce qu'**une portion de pied (14) s'étend entre la portion de tête (15) et la collerette d'appui (7), en s'amenuisant suivant un tracé conique en direction de la portion de tête (15), qui comporte un certain nombre d'échancrures d'affaiblissement de résistance structurale (21) disposées dans le sens longitudinal à l'opposé des zones d'adaptation (18).

4. Dispositif selon la revendication 3, **caractérisé en ce que** les zones d'adaptation (18) sont respectivement munies de deux segments de rive (19) et d'une portion de base (20) définissant ainsi une configuration en forme d'étrier, les segments de rive (19) étant en l'occurrence respectivement disposés attenants à des zone de renforcement (17) voisines et **en ce que** les portions de base (20) sont disposées dans la plan radial plus loin vers l'extérieur que les zones de renforcement (17).

5. Dispositif selon l'une des revendications 1 à 4, **caractérisé en ce que** l'épaisseur des zones de renforcement (17) est supérieure à celle des zones d'adaptation (18).

6. Dispositif selon l'une des revendications 1 à 5, **caractérisé en ce que** l'écrou encastré (1) est réalisé dans une matière synthétique plus tendre que celle dont est constituée la portion filetée (25) et comporte une portion formant gabarit de passage (16) qui constitue une partie du gabarit de passage de vis (10) et dont le diamètre intérieur est plus petit que le diamètre extérieur de la portion filetée (25), ce qui fait qu'il est possible de réaliser un taraudage dans le gabarit de passage (16) de l'écrou encastré (1) par l'action exercée par le filetage extérieur (27) de la portion filetée (25) de la vis de fixation (26).
